# EUROPÄISCHE PATENTSCHRIFT

(11) **EP 0 692 409 B1**
(45) Veröffentlichungstag und Bekanntmachung des Hinweises auf die Patenterteilung: **07.01.1998**
(21) Anmeldenummer: 94110959.7
(22) Anmeldetag: 14.07.1994
(51) Int. Cl.: B60R 13/02

(54) **Auskleidungsteil für Kraftfahrzeuge sowie Verfahren zu dessen Herstellung**
Lining for automotive vehicle and process of producing the same
Revêtement pour véhicule automobile ainsi que son procédé de fabrication

(43) Veröffentlichungstag der Anmeldung: 17.01.1996
(73) Patentinhaber: EMPE-WERKE Ernst Pelz GmbH & Co. KG, 82532 Geretsried (DE)
(72) Erfinder: Welich, Sven, D-83661 Lenggries (DE); Feist, Gunther, D-83022 Rosenheim (DE); Gardill, Dr. Rainer, D-83677 Reichersbeuern (DE)
(74) Vertreter: Goddar, Heinz J., Dr.

(56) Entgegenhaltungen:
- EP-A- 0 360 214
- WO-A-93/04226
- DE-A- 1 504 302
- DE-A- 2 162 912
- DE-A- 3 129 145
- FR-A- 2 464 859
- FR-A- 2 510 477
- GB-A- 1 069 564
- US-A- 5 151 327

## Beschreibung

Die Erfindung betrifft ein flächiges Auskleidungsteil für Kraftfahrzeuge, wie Kfz-Himmel oder dergleichen, mit einer ein- oder mehrlagigen Kernschicht und zwei diese abdeckenden Außenschichten aus Naturfaservlies, welche mit der Kernschicht durch je eine Kleberschicht verbunden sind, sowie ein Verfahren zum Herstellen eines flächigen Auskleidungsteiles für Kraftfahrzeuge, wie Kfz-Himmel oder dergleichen, bei dem beidseits einer Kernschicht je eine Kleberschicht sowie daran anschließend je eine Außenschicht aus Naturfaservlies angeordnet werden und der gesamte Schichtaufbau unter Anwendung von Druck und Wärme in einem geheizten Umformwerkzeug oder dergleichen miteinander verbunden wird (siehe DE-U-7916899).

Es sind Auskleidungsteile in Form von Kfz-Himmeln der vorstehend beschriebenden Art bekannt, bei denen die Kernschicht aus Polyurethanschaum besteht, wahrend die Außenschichten aus Glasvliesen bzw. Glasfasern bestehen. Die Glasfaserschichten sind dabei mittels Polyurethankleber oder thermischem Kleber an den Außenflächen der Kernschicht angeklebt. Als Abdeckschichten werden dabei Polyester- oder Papiervliese verwendet, die ein Verkleben der Außenschichten mit dem Umformwerkzeug verhindern und eine Schutzabdeckung für die als Außenschicht verwendeten Glasvliese darstellen.

Bei diesen bekannten Auskleidungsteilen ergeben sich Entsorgungsprobleme, da Glasfaservliese nicht recyclefähig sind bzw. erst nach aufwendiger Materialtrennung recycled werden können.

Es sind weiterhin Auskleidungsteile der gattungsgemäßen Art bekannt, bei denen die Außenschichten aus mechanisch verfestigten, vernadelten Jutefaservliesen bestehen. Dabei kann eine Dekorschicht vorgesehen sein, welche in einem getrennten Arbeitsgang kaschiert oder auch in einem einzigen Schritt bei der Herstellung der Kernschicht anstelle des äußeren Vlieses aufgebracht wird. Die Jutevliese sind mechanisch verfestigt und sind mittels der bei dem bekannten Auskleidungsteil aus Polyurethankleber bestehenden Kleberschichten mit der Kernschicht verklebt.

Es hat sich gezeigt, daß bei dieser Konstruktion keine ausreichende Festigkeit unter Klimabelastungen erbracht werden kann. Vielmehr biegt sich das Auskleidungsteil insbesondere bei Konstruktion als freitragender Himmel unter Klimabelastung im feucht-warmen Klima unzulässig stark durch.

Der Erfindung liegt die Aufgabe zugrunde, ein Auskleidungsteil der gattungsgemäßen Art zu schaffen, welches auch unter an Kfz-Himmel zu stellenden Klimaanforderungen bei voller Recyclefähigkeit ausreichende Formstabilität aufweist.

Erfindungsgemäß wird diese Aufgabe dadurch gelöst, daß die Kleberschichten aus Epoxidharzschaum bestehen; und daß die Außenschichten aus ausschließlich locker vernadeltem Material bestehen.

Dabei kann vorgesehen sein, daß mindestens eine der Außenschichten aus Naturfaservlies besteht.

Ferner sieht die Erfindung vor, daß mindestens eine der Außenschichten Flachsfaservlies aufweist.

Auch kann vorgesehen sein, daß mindestens eine der Außenschichten Jutefaserviles aufweist.

Es kann auch vorgesehen sein, daß mindestens eine der Außenschichten Sisalfaservlies aufweist.

Die Erfindung schlägt weiterhin vor, daß mindestens eine der Außenschichten zu der der Kernschicht abgewandten Seite hin mit einer Abdeckschicht abgedeckt ist.

Auch kann erfindungsgemäß vorgesehen sein, daß mindestens eine der Abdeckschichten aus Polyestervlies besteht.

Dabei kann vorgesehen sein, daß mindestens eine der Abdeckschichten aus Papiervlies besteht.

Ferner sieht die Erfindung vor, daß die Abdeckschicht(en) mit der (jeweiligen) Außenschicht mittels eines Epoxidharzschaumes verklebt ist/sind.

Eine weitere Ausführungsform der Erfindung ist gekennzeichnet durch eine der Sichtseite zugewandte äußere Dekorschicht.

Auch kann erfindungsgemäß vorgesehen sein, daß die Kernschicht aus Polyurethanschaum besteht.

Dabei kann vorgesehen sein, daß die Kernschicht aus Wellkartonage besteht.

Erfindungsgemäßes Verfahren ist dadurch gekennzeichnet, daß die Kleberschichten durch Aufsprühen eines schäumenden Epoxidharzes gebildet werden, welches beim Aufschäumen im Umformwerkzeug die Außenschichten durchtränkt.

Dabei kann vorgesehen sein, daß das Epoxidharz auf die Kernschicht aufgesprüht wird.

Die Erfindung schlägt hierbei auch vor, daß das Epoxidharz auf die der Kernschicht zugewandte Seite der Außenschichten aufgesprüht wird.

Eine weitere Ausführungsform des Verfahrens sieht vor, daß auch die Abdeckschichten mit dem Epoxidharz durchtränkt werden.

Der Erfindung liegt die überraschende Erkenntnis zugrunde, daß es gelingt, ein auch unter Klimabelastung formstabiles Auskleidungsteil aus vollständig recyclebarem Material zu schaffen, indem die Kleberschichten aus schäumendem Epoxidharz ausgebildet werden, wobei vorzugsweise die Naturfaservliese auf der zur Kernschicht zugewandten Seite mit dem schäumfähigen Epoxidharz besprüht werden. Bei Aushärtung dieses Verbundes in einem geheizten Unformwerkzeug erfolgt neben der Verklebung der Außenschichten mit der Kernschicht eine gute Durchtränkung der Außenschichten. Diese Durchtränkung, bei gleichzeitigem Verzicht auf eine chemische oder thermische Verfestigung der Außenschichten, ist für die Klimabeständigkeit unerläßlich.

Überraschenderweise gelingt es nicht nur dann, wenn die Kernschicht aus Polyurethanschaum besteht, sondern auch, wenn eine Kernschicht aus einfacher Wellkartonage verwendet wird, eine hervorragende Klimabeständigkeit zu erzielen. Selbst im Feuchtklima bleibt die Festigkeit der Wellkartonage in ausreichendem Maß bestehen, wobei die Einsatzmenge des Epoxidharzes soweit reduziert werden kann, daß in der Tat von einem voll recyclefähigem Auskleidungsteil gesprochen werden kann.

Zur Verbesserung der Entformbarkeit ist es möglich, über das Naturfaservlies der Außenschichten dünne Polyestervliese oder Papiervliese als Abdeckschichten zu legen, die durch das schäumende Epoxidharz, aus dem die Kleberschichten bestehen, zugleich mitverklebt werden. Die Abdeckschichten erhöhen gleichzeitig die Steifigkeit, wobei dies jedoch nicht unbedingt notwendig ist. Als Papiervliese können beschichtete oder unbeschichtete Materialien eingesetzt werden.

Weitere Merkmale und Vorteile der Erfindung ergeben sich aus der nachstehenden Beschreibung, in der Ausführungsbeispiele anhand der schematischen Zeichnung im einzelnen erläutert sind.

Dabei zeigt:
- Fig. 1: ein erstes Ausführunsbeispiel eines Auskleidungsteiles nach der Erfindung im Schnitt senkrecht zur Flächenerstreckung desselben;
- Fig. 2: in Fig. 1 entsprechender Darstellung ein zweites Ausführungsbeispiel eines Auskleidungsteiles nach der Erfindung; und
- Fig. 3: in Fig. 1 und 2 entsprechender Darstellung ein drittes Ausführungsbeispiel eines Auskleidungsteiles nach der Erfindung.

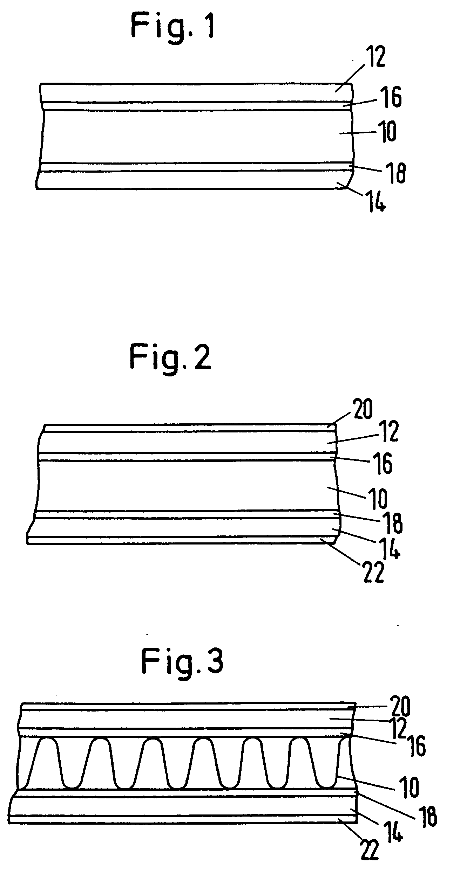

Beim Ausführungsbeispiel von Fig. 1 ist eine Kernschicht 10 aus Polyurethanschaum (Halbhartschaum, beziehbar durch die Firma Reißgies, Dichte 33 kg/m³) beidseits mit Außenschichten 12, 14 über Kleberschichten 16, 18 verbunden. Die Außenschichten 12, 14 bestehen aus Flachsfaservlies, mit einem Trockengewicht von 150 g/m², wahrend die Klebeschichten 16, 18 durch schäumendes Epoxidharz mit einem Trockengewicht von 160 g/m², lieferbar durch die Firma Ciba-Geigy, unter Verwendung von Harz des Typs LMW 1135, ferner Härter des Typs HY 5003, gebildet sind.

Das Ausführungsbeispiel von Fig. 2 entspricht demjenigen von Fig. 1, wobei aber die Außenschichten 12, 14 durch Polyestervliese mit einem Trockengewicht von 50 g/m², chemisch gebunden, beziehbar durch die Firma Textilgruppe Hof, abgedeckt sind. Die Abdeckschichten 20, 22 aus Polyestervlies erleichtern das Entformen des gesamten Schichtverbundes aus dem Umformwerkzeug.

Beim Ausführungsbeispiel von Fig. 3 besteht die Kernschicht 10 aus Wellkartonage mit einer Steghöhe von 5 bis 7 mm und einem Flächengewicht von 425 g/m². Die Kleberschichten 16, 18 bestehen aus 100 g/m² von dem Epoxidharz, lieferbar durch die Firma Ciba-Geigy, mit den Harz- und Härtertypen der Ausführungsbeispiele von Fig. 1 und Fig. 2. Der übrige Schichtaufbau ist gegenüber dem Ausführungsbeispiel von Fig. 2 unverändert.

Bei der Herstellung der vorstehend beschriebenen Ausführungsbeispiele gemäß den Fig. 1 bis 3 wird jeweils so vorgegangen, daß das Epoxidharz auf die der Kernschicht 10 zugewandte Seite der Außenschichten 12, 14 durch Besprühen aufgebracht wird. Es ist jedoch auch möglich, die Kernschicht 10 selbst auf beiden Oberflächen mit dem Epoxidharz zu besprühen.

Bevorzugte Einsatzmengen sind, für die Abdeckschichten 20, 22, Polyestervliese mit einem Flächengewicht von 30 bis 150 g/m², vorzugsweise 50 bis 70 g/m², und für die Außenschichten 12, 14 Flachs- oder Jutefaservliese mit einem Flächengewicht (trocken) von 100 bis 300 g/m², vorzugsweise 100 bis 200 g/m².

Als Material für die Kernschicht findet, falls nicht Wellkartonage verwendet wird, vorzugsweise PU-Schaum mit einem Raumgewicht von 20 bis 60 kg/m³, vorzugsweise 25 bis 35 kg/m³, Verwendung. Der Epoxidschaum für die Kleberschichten 16, 18 wird vorzugsweise mit 60 bis 300 g/m² angesetzt, insbesondere, sofern die Kernschicht 10 aus PU-Schaum besteht, mit 120 bis 180 g/m², und dann, wenn die Kernschicht 10 aus Wellkartonage bzw. Wellpappe besteht, mit 80 bis 150 g/m².

Finden für die Abdeckschichten 20, 22 statt Polyestervliesen Papiervliese Verwendung, hat sich insbesondere ein Flächengewicht von 90 g/m² bewährt.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in Ihren verschiedenen Ausführungsformen wesentlich sein.

## Patentansprüche

1. Flächiges Auskleidungsteil für Kraftfahrzeuge, wie Kfz-Himmel oder dergleichen, mit einer ein- oder mehrlagigen Kernschicht und zwei diese abdeckenden Außenschichten aus Naturfaservlies, welche mit der Kernschicht durch je eine Kleberschicht verbunden sind, dadurch gekennzeichnet, daß die Kleberschichten (16, 18) aus Epoxidharzschaum bestehen; und daß die Außenschichten (12, 14) aus sowohl mechanisch als auch chemisch/thermisch unverfestigtem Material bestehen.

2. Auskleidungsteil nach Anspruch 1, dadurch gekennzeichnet, daß mindestens eine der Außenschichten (12, 14) aus Naturfaservlies besteht.

3. Auskleidungsteil nach Anspruch 1 oder 2, dadurch gekennzeichnet, daß mindestens eine der Außenschichten (12, 14) Flachsfaservlies aufweist.

4. Auskleidungsteil nach einem der vorangehenden Ansprüche, dadurch gekennzeichnet, daß mindestens eine der Außenschichten (12, 14) Jutefaservlies aufweist.

5. Auskleidungsteil nach einem der vorangehenden Ansprüche, dadurch gekennzeichnet, daß mindestens eine der Außenschichten (12, 14) Sisalfaservlies aufweist.

6. Auskleidungsteil nach einem der vorangehenden Ansprüche, dadurch gekennzeichnet, daß mindestens eine der Außenschichten (12, 14) zu der der Kernschicht (10) abgewandten Seite hin mit einer Abdeckschicht (20, 22) abgedeckt ist.

7. Auskleidungsteil nach Anspruch 6, dadurch gekennzeichnet, daß mindestens eine der Abdeckschichten (20, 22) aus Polyestervlies besteht.

8. Auskleidungsteil nach Anspruch 6 oder 7, dadurch gekennzeichnet, daß mindestens eine der Abdeckschichten (20, 22) aus Papiervlies besteht.

9. Auskleidungsteil nach einem der Ansprüche 6 bis 8, dadurch gekennzeichnet, daß die Abdeckschicht(en) (20, 22) mit der (jeweiligen) Außenschicht (12, 14) mittels eines Epoxidharzschaumes verklebt ist/sind.

10. Auskleidungsteil nach einem der vorangehenden Ansprüche, gekennzeichnet durch eine der Sichtseite zugewandte äußere Dekorschicht.

11. Auskleidungsteil nach einem der vorangehenden Ansprüche, dadurch gekennzeichnet, daß die Kernschicht (10) aus Polyurethanschaum besteht.

12. Auskleidungsteil nach einem der Ansprüche 1 bis 11, dadurch gekennzeichnet, daß die Kernschicht (10) aus Wellkartonage besteht.

13. Verfahren zum Herstellen eines flächigen Auskleidungsteiles für Kraftfahrzeuge, wie Kfz-Himmel oder dergleichen, bei dem beidseits einer Kernschicht je eine Kleberschicht sowie daran anschließend je eine Außenschicht aus Naturfaservlies angeordnet werden und der gesamte Schichtaufbau unter Anwendung von Druck und Wärme in einem geheizten Umformwerkzeug oder dergleichen miteinander verbunden wird, insbesondere zum Herstellen eines Auskleidungsteiles nach einem der vorangehenden Ansprüche, dadurch gekennzeichnet, daß die Kleberschichten (16, 18) durch Aufsprühen eines schäumenden Epoxidharzes gebildet werden, welches beim Aufschäumen im Umformwerkzeug die Außenschichten (12, 14) durchtränkt.

14. Verfahren nach Anspruch 13, dadurch gekennzeichnet, daß das Epoxidharz auf die Kernschicht aufgesprüht wird.

15. Verfahren nach Anspruch 13 oder 14, dadurch gekennzeichnet, daß das Epoxidharz auf die der Kernschicht zugewandte Seite der Außenschichten aufgesprüht wird.

16. Verfahren nach einem der Ansprüche 12 bis 15 zur Herstellung eines Auskleidungsteiles mit die Außenschichten abdeckenden Abdeckschichten aus Vliesmaterial, dadurch gekennzeichnet, daß auch die Abdeckschichten mit dem Epoxidharz durchtränkt werden.

## Claims

1. A flat lining part for motor vehicles, such as the inside roof lining of motor vehicles, or the like, comprising a single-ply or multi-ply core layer and two natural fibre fleece outer layers covering the said core layer and each connected thereto by a layer of adhesive, characterised in that the adhesive layers (16, 18) consist of epoxy resin foam and in that the outer layers (12, 14) consist of both mechanically and also chemically/thermally unhardened material.

2. A lining part according to claim 1, characterised in that at least one of the outer layers (12, 14) consists of natural fibre fleece.

3. A lining part according to claim 1 or 2, characterised in that at least one of the outer layers (12, 14) comprises flax fibre fleece.

4. A lining part according to any one of the preceding claims, characterised in that at least one of the outer layers (12, 14) comprises jute fibre fleece.

5. A lining part according to any one of the preceding claims, characterised in that at least one of the outer layers (12, 14) comprises sisal fibre fleece.

6. A lining part according to any one of the preceding claims, characterised in that at least one of the outer layers (12, 14) is covered by a covering layer (20, 22) towards the side remote from the core layer (10).

7. A lining part according to claim 6, characterised in that at least one of the covering layers (20, 22) consists of polyester fleece.

8. A lining part according to claim 6 or 7, characterised in that at least one of the covering layers (20, 22) consists of paper fleece.

9. A lining part according to any one of claims 6 to 8, characterised in that the covering layer(s) (20, 22) is/are connected to the (respective) outer layer (12, 14) by means of an epoxy resin foam.

10. A lining part according to any one of the preceding claims, characterised by an outer decorative layer facing the visible side.

11. A lining part according to any one of the preceding claims, characterised in that the core layer (10) consists of polyurethane foam.

12. A lining part according to any one of claims 1 to 11, characterised in that the core layer (10) consists of corrugated cardboard.

13. A method of producing a flat lining part for motor vehicles, such as inside roof linings or the like, wherein a layer of adhesive is disposed on either side of a core layer followed in each case by an outer layer of natural fibre fleece and the entire laminated structure is interconnected by the application of pressure and heat in a heated forming tool or the like, more particularly for the production of a lining part according to any one of the preceding claims, characterised in that the adhesive layers (16, 18) are formed by applying by spraying a foaming epoxy resin which on foaming in the forming tool impregnates the outer layers (12, 14).

14. A method according to claim 13, characterised in that the epoxy resin is sprayed on to the core layer.

15. A method according to claim 13 or 14, characterised in that the epoxy resin is sprayed on to the side of the outer layers facing the core layer.

16. A method according to any one of claims 12 to 15 for the production of a lining part having covering layers of fleece material which cover the outer layers, characterised in that the covering layers are also impregnated with the epoxy resin.

## Revendications

1. Elément de revêtement plat pour véhicules automobiles, tel que plafond de véhicule automobile ou élément semblable, comportant une couche centrale à une ou plusieurs strates et deux couches extérieures en voile de fibres naturelles qui couvrent celle-ci et y sont unies chacune par une couche de colle, caractérisé par le fait que les couches de colle (16, 18) sont constituées de résine époxyde expansée et que les couches extérieures (12, 14) sont constituées de matière non consolidée aussi bien mécaniquement que chimiquement/thermiquement.

2. Elément de revêtement selon la revendication 1 caractérisé par le fait qu'au moins une des couches extérieures (12, 14) est constituée de voile de fibres naturelles.

3. Elément de revêtement selon l'une des revendications 1 et 2, caractérisé par le fait qu'au moins une des couches extérieures (12, 14) présente du voile de fibres de lin.

4. Elément de revêtement selon l'une des revendications précédentes, caractérisé par le fait qu'au moins une des couches extérieures (12, 14) présente du voile de fibres de jute.

5. Elément de revêtement selon l'une des revendications précédentes, caractérisé par le fait qu'au moins une des couches extérieures (12, 14) présente du voile de fibres de sisal.

6. Elément de revêtement selon l'une des revendications précédentes, caractérisé par le fait qu'au moins une des couches extérieures (12, 14) est couverte sur le côté opposé à la couche centrale (10) d'une couche de couverture (20, 22).

7. Elément de revêtement selon la revendication 6, caractérisé par le fait qu'au moins une des couches de couverture (20, 22) est constituée de voile de polyester.

8. Elément de revêtement selon l'une des revendications 6 et 7, caractérisé par le fait qu'au moins une des couches de couverture (20, 22) est constituée de voile de papier.

9. Elément de revêtement selon l'une des revendications 6 à 8, caractérisé par le fait que la ou chaque couche de couverture (20, 22) est collée à la couche extérieure associée (12, 14) au moyen de résine époxyde expansée.

10. Elément de revêtement selon l'une des revendications précédentes, caractérisé par une couche décorative extérieure tournée vers le côté vu.

11. Elément de revêtement selon l'une des revendications précédentes, caractérisé par le fait que la couche centrale (10) est constituée de polyuréthane expansé.

12. Elément de revêtement selon l'une des revendications 1 à 11, caractérisé par le fait que la couche centrale (10) est constituée de cartonnage ondulé.

13. Procédé de fabrication d'un élément de revêtement plat pour véhicules automobiles, tel que plafond de véhicule automobile ou élément semblable, dans lequel on place de chaque côté d'une couche centrale une couche de colle et ensuite une couche extérieure en voile de fibres naturelles et on unit l'ensemble de couches en y appliquant pression et chaleur dans un outil de transformation chauffé ou un dispositif semblable, en particulier pour la fabrication d'un élément de revêtement selon l'une des revendications précédentes, caractérisé par le fait qu'on forme les couches de colle (16, 18) par application par pulvérisation d'une résine époxyde expansible qui, lors de son expansion dans l'outil de transformation, imprègne les couches extérieures (12, 14).

14. Procédé selon la revendication 13, caractérisé par le fait qu'on applique la résine époxyde par pulvérisation sur la couche centrale.

15. Procédé selon l'une des revendications 13 et 14, caractérisé par le fait qu'on applique la résine époxyde par pulvérisation sur la face des couches extérieures tournée vers la couche centrale.

16. Procédé selon l'une des revendications 12 à 15 pour la fabrication d'un élément de revêtement ayant des couches de couverture en voile couvrant les couches extérieures, caractérisé par le fait qu'on imprègne aussi les couches extérieures de la résine époxyde.
